# EUROPEAN PATENT SPECIFICATION

(11) **EP 4 160 152 B1**
(45) Date of publication and mention of the grant of the patent: **18.09.2024**
(21) Application number: 22196796.1
(22) Date of filing: 21.09.2022
(51) Int. Cl.: G01C 21/00, G01C 21/34, B60W 60/00

(54) **LANE SEARCH FOR SELF-DRIVING VEHICLES**
SPURSUCHE FÜR SELBSTFAHRENDE FAHRZEUGE
RECHERCHE DE VOIE POUR VÉHICULES AUTONOMES

(30) Priority: 29.09.2021 US 202117488952
(43) Date of publication of application: 05.04.2023
(73) Proprietor: WAYMO LLC, Mountain View, CA 94043 (US)
(72) Inventor: Thibaux, Romain Jean, Mountain View, 94043 (US); Chaudhari, Pankaj Purushottam, 94043 Mountain View (US); Hsiao, Jonathan, Mountain View, 94043 (US)
(74) Representative: Anderson, Oliver Ben

(56) References cited:
- CN-A- 109 934 865
- DE-A1- 102008 024 548
- US-A1- 2016 313 133
- US-A1- 2018 129 203

## Description

### BACKGROUND

This specification relates to self-driving cars, and more particularly to techniques for generating predicted lane paths that represent traffic lanes in a drivable region of space.

Navigation systems installed on self-driving vehicles typically use pre-generated maps for navigation. The maps are pre-generated using digital map data, satellite data, and observations made during previous trips. Such maps can be stored in the memory of the self-driving vehicle, or in a data center in communication with the vehicle. US 2016/0313133 A1 discloses a path planning technique for autonomous vehicles, wherein a shortest path is determined on a search graph defined in triangulation space. Document US 2018/129203 A1 discloses a trajectory planner for autonomous vehicles, wherein an optimal trajectory path is created on a search graph, which path is subsequently smoothed.

However, in some cases, a self-driving vehicle can encounter areas in which some roads have not yet been mapped. In addition, even if a road has been mapped, when new obstacles emerge, for example, due to construction or the adjustments to lanes on the road, the maps can be inaccurate. Such inaccuracies can present challenges to vehicles navigating autonomously - that is, without guidance from a driver.

### SUMMARY

In general, innovative aspects of the subject matter described in this specification relate to creating lane graph topologies and to creating lane graph geometries from lane graph topologies.

Particular embodiments of the subject matter described in this specification can be implemented so as to realize one or more of the following advantages.

The techniques described below can deterministically enumerate all lane graph topologies through a drivable region. This completeness property guarantees that the lane graph topology corresponding to the true lane graph is generated. Indeed, before the optimal topology and later of the optimal geometry can be selected, the correct topology is guaranteed to at least be in the list of topologies being considered, hence the importance of completeness.

In addition, the techniques can produce a score associated with each lane graph that indicates a predicted likelihood that each lane graph correctly reflects actual lane locations, and the scores can be used to rank possible lane graphs based on the prediction from most likely to least likely. Such scores can be used to select a lane graph or first a lane graph topology, for example, by evaluating a score associated with each lane graph in the enumeration, and selecting the lane graph with the highest score.

A search method can take further advantage of the scores to determine the optimal lane graph by exploring the space of all possible lane graph topologies in an order that considers first the highest scoring topologies. In situations where time is limited and a full enumeration cannot be completed, this search method increases the chance that the true lane graph will nonetheless be found, as if the enumeration had in fact completed.

The techniques described below also need not rely on machine learning techniques such as deep neural networks. Since deep nets are computationally expensive, require extensive training data, and can produce approximate results, a deterministic approach can be advantageous.

The techniques described below further create lane graph geometries through a drivable region using the lane graph topologies using an optimization that involves the local optimization of a score over a convex space. Such optimizations allow modern computers to run a variety of efficient local optimization algorithms, so these techniques enable self-driving cars to make route decisions in real-time. In this specification, computing a lane graph in real-time means that the on-board computing system of the vehicle can compute a lane graph within a time period required for fully autonomous driving. In other words, the on-board computing system need not refer to a pre-stored representation of lanes on a road. Rather, the computing system can generate the representation of the lanes on the fly while also navigating the vehicle. In some implementations, the computing system of a self-driving car can continually re-generate lane graphs while navigating through a region, which allows for fully autonomous navigation through a region that may not be full or partially represented in pre-stored map data. Therefore, the techniques described in this specification can allow for fully autonomous navigation even on roads that have never been mapped, e.g., roads that were just built.

The techniques described below also allow for easy integration of external evidence, e.g., "No Left Turn" or "Keep Left" signs. A candidate topology can be determined to be compatible or not compatible with such evidence, and the techniques described in this specification can be used to disqualify any topology that would be incompatible with the evidence. As a result, the techniques will return a most likely topology that also satisfies pre-stored constraints or constraints derived from external evidence, including road signs. The rule-based integration of constraints is a major advantage over approaches that attempt to use purely machine learning. For example, such external evidence learned in real-time cannot easily be used with neural networks without exploding the feature space.

The techniques described below also integrate with known or pre-stored constraints. For instance, part of the lane graph may be known for certain, either because it can be determined that nothing has changed in that region since it was last mapped, or because of observed traffic, which determines a lane direction. In addition, a constraint can state that a region is required to have at least a configured minimum size to contain a lane, and a lane cannot pass through a region that is smaller than that minimum size.

The techniques described below further impose global consistency invariants. For example, in a drive-on-right country, a lane graph can never contain a lane with a neighbor lane traveling in the opposite direction on its right. With proper training, a machine learning method may be able to learn to produce such inconsistent results only rarely, but it cannot provide a deterministic guarantee.

Additionally, the techniques described below enable the system to operate in situations not previously encountered. Even in a region of space whose geometry is unlike any encountered previously, or only encountered rarely, the techniques still enumerate possible topologies. In contrast, machine learning approaches can be applied effectively only in situations similar to their training data; otherwise, their performance degrades quickly.

One aspect features receiving data representing a topological lane path through a plurality of cells of a drivable region. From the topological lane path, an initial polyline that traverses the same plurality of cells as the topological lane path can be generated. The initial polyline can be defined by vertices located on edges of a triangulated decomposition of the drivable region. A geometry optimization process can be performed on the initial polyline to generate a final polyline according to optimization criteria. From the final polyline, a geometric lane path representing a geometry of a drivable lane that traverses the drivable region can be generated.

One or more of the following features can be included. The vertices on the same triangulation line can satisfy a directional constraint. The geometry optimization process can assign preferable scores to shorter polylines. The geometry optimization can include performing gradient descent. Generating the geometric lane path can include smoothing the final polyline to form a smoothed final polyline. The smoothed final polyline can be a spline of the final polyline. The method can include evaluating the final polyline against a constraint; and in response to determining that the constraint is not satisfied, rejecting the final polyline.

The details of one or more implementations of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIGS. 1a-d illustrates a drivable region.
FIG. 1e shows a simple example with no intersections and a single entry.
FIGS. 1f-1j illustrate the distinction between enumerating paths and enumerating lane graph topologies.
FIG. 2 is a diagram of a topological representation of a region of space.
FIGS. 3a-3c are diagrams illustrating the method of creating a search tree for a drivable region of space.
FIG. 4 is a diagram of a cellular decomposition of a drivable region.
FIG. 5 illustrates a lane graph topology with several paths.
FIG. 6 illustrates an example system that can determine lane graph topologies through a drivable region of space.
FIG. 7 is a flowchart of an example process for enumerating and scoring lane graph topologies.
FIG. 8 illustrates an example system that can determine lane geometry from lane topologies.
FIG. 9a illustrates paths through a drivable region of space.
FIG. 9b illustrates lane geometries through a drivable region of space.
FIG. 10 is a flow diagram of an example process that determines a lane geometry through a drivable region of space.
FIG. 11 illustrates a drivable region of space.

Like reference numbers and designations in the various drawings indicate like elements.

### DETAILED DESCRIPTION

This specification describes techniques used to determine the possible location, shape, and connectivity of drivable lanes available to a self-driving vehicle navigating a region of space (or "region") potentially containing obstacles. This collection of lanes with their shapes and network structures is called a "lane graph," which is a map of where vehicles are permitted to drive.

Such a lane graph can be described as being composed of two parts: a topology and a geometry. A lane graph topology is a representation of the collection of lanes (such as the number of lanes, or their orientation), along with their network structure (such as splits or merges), as well as spatial relationship between lanes and obstacles. The word topology refers to all spatial relationships that hold in the face of certain continuous deformations of the shape of the lanes. For example, two semi-circles of different sizes have different geometries (because the sizes differ), but can have the same topology.

A lane graph geometry is a representation of the shape and location of some or all of the lanes as they traverse the region. Together, the lane graph topology and the lane graph geometry fully characterize the location and structure of drivable lanes.

This specification also describes techniques used to guarantee the generation of a valid lane graph topology, which can include enumerating all possible lane graph topologies up to a maximum branching depth. The system can effectively search the collection of possible lane graph topologies to determine a most likely lane graph topology, for example, by applying scores to a collection of lane graph topologies generated for a particular region.

This specification further describes techniques for generating and evaluating lane graph geometries once a particular lane graph topology has been chosen. This approach represents a combination of a discrete enumeration of lane graph topologies followed by a continuous determination of a corresponding lane graph geometry. Taken together, these steps enable the determination of a lane graph, or of a list of several most likely lane graphs, that a self-driving car can use to guide its trajectory or interpret and anticipate the motion of other vehicles, as described below.

Note that whenever this specification refers to self-driving cars, the same techniques described herein can be used in the same or similar ways for any appropriate kind of self-driving vehicles, including buses, trucks, motorcycles, drones, planes, and boats, to name just a few examples.

In this specification, an obstacle refers to an area of a region that is not available to be traversed by a vehicle. For example, obstacles can include a sidewalk, a median strip, a building, the center of a traffic circle, a road barrier, or a line of traffic cones. For brevity, regions that can be traversed by vehicles will be referred to as drivable regions.

In this specification, a drivable region represents an area in which vehicles ordinarily drive. A self-driving vehicle can identify a region as drivable even if actually driving there would violate traffic laws, e.g., by recognizing a lane dedicated to oncoming traffic. Conversely, a self-driving vehicle can identify a region as non-drivable even if it would be physically possible for a vehicle to drive there, e.g., grassy areas or sidewalks.

The drivable region of space can be decomposed using cellular decomposition techniques into a number of smaller regions, which in this specification will be referred to as cells. Cells represent subsets of a drivable region of space. It can be a property of the decomposition that the boundary of a cell can touch the boundary of an obstacle, but a cell cannot fully contain an obstacle. Moreover, a cell generated by cellular decomposition cannot contain any holes, and as a result, a region corresponding to a cell can encompass only drivable areas.

The exact geometries of cells may be, but need not be, specified for a vehicle to use the techniques described in this specification. Rather, the cells can be defined solely by information representing how cells are connected by edges. In this specification, a cell having an edge represents that a vehicle can travel from a region represented by the cell to a second region. The second region might be represented by another cell or might be considered a drivable region outside the region of interest, in which case no cell would be included. Thus, two cells sharing an edge between them represents two drivable areas that are physically contiguous in reality. Edges on the border of a region of interest can be referred to as entrance edges or exit edges depending on the direction of travel. Entrance edges and exit edges thus connect a cell within the region of interest to a drivable area that is outside the region of interest.

In this specification, a link refers to an intra-cell connection between nodes on different respective edges of a cell. Each node along an edge represents a connection between links or an initial entry or exit point on an entrance edge or exit edge. The nodes encode a left-right ordering between different combinations of links across the cell. Thus, the precise location of a node along an edge is not important and thus does not need to be specified explicitly. However, information representing the relative ordering of nodes along an edge does need to be taken into consideration when enumerating topologies.

A link between nodes on edges represents one or more drivable lanes that cross the two edges one after the other in the order specified by the direction of the link. Thus, nodes also have a corresponding associated direction of travel.

Each link represents a topology of a drivable lane. In other words, it represents a family of all lanes or groups of lanes having the property that they cross the two edges at the same nodes one after the other in the order specified by the direction of the link and independent of the precise shape of the lanes.

Two links can be connected at a common node, with the end of one link coinciding with the start of another link. This configuration represents at least one drivable lane crossing three edges at corresponding nodes one after the other, by passing first through the cell of the first link, then through the cell of the second link.

In this specification, a path is a sequence of connected links having a direction that runs from an entrance edge to an exit edge through a sequence of nodes. A path thus represents a sequence of links traversing cells that a vehicle can use to traverse the region of interest. More precisely, a path represents the topology of at least one drivable lane traversing the region of interest through the specified sequence of nodes along edges and cells. Because a path represents a lane or group of lanes traversing an edge, the endpoint of a link can connect to the start of a link on the other side of the corresponding edge.

One useful property of representing paths using lane graph topologies is that removing excursions from a path does not change the corresponding topology. In this specification, an excursion is a palindromic sequence of edges in a lane path. In other words, the sequence of edges is the same forward and backward. Since a topology is only defined up to continuous deformation, a lane entering a cell then exiting the cell through the same edge can be continuously deformed to not enter the cell at all. As a result, a path containing such an excursion can be shortened until it contains no excursions without changing the lane topology it represents. Such a shortened path with no excursions will be referred to as a minimal path. Removing excursions from paths greatly reduces the number of possibilities to evaluate, because the system can find the true lane graph topology using only minimal paths with no excursions.

A lane graph topology is a collection of paths, potentially sharing some links. For instance, one link can connect to more than one other link, which represents a collection of one or more lanes coming from the same direction, then separating, either because parallel lanes separate or because a single lane splits, or a combination of both. Observe that in this example, a lane graph topology is only a partial representation. It does not specify whether two neighboring lanes separate or a single lane splits. This remaining decision is made when selecting a lane graph geometry, as described below. In another example, in a lane graph topology, several links can also connect to the same link. This situation represents lanes coming from different origins and thereafter continuing in the same direction, with at least two of the lanes merging.

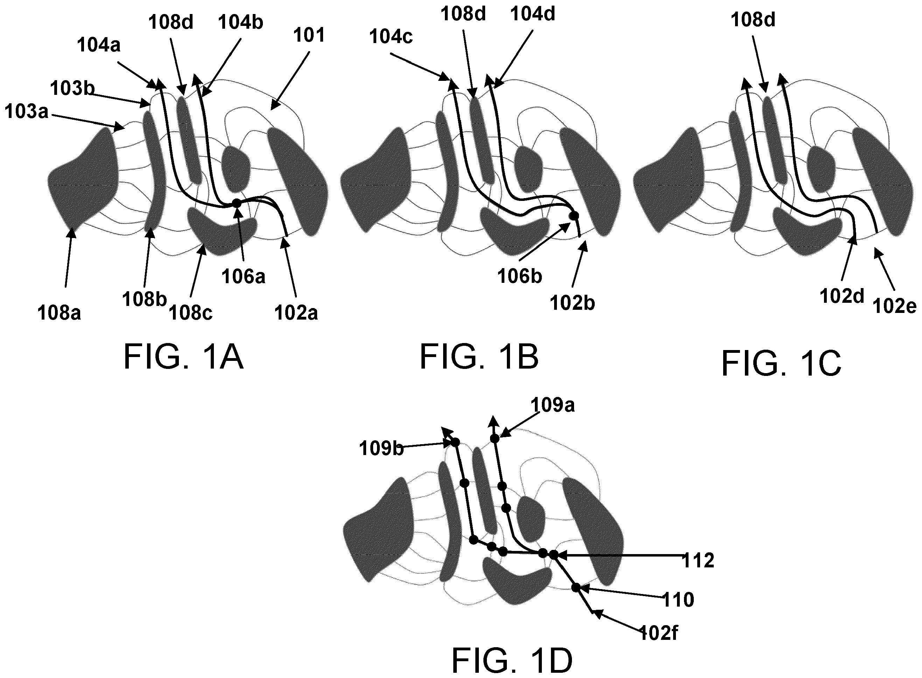

FIGS. 1a-d illustrates a drivable region 101 (illustrated in white), with obstacles (including 108a, 108b, 108c and 108d and illustrated in black), and decomposed into cells. Edges (including 103a, 103b) between cells are drawn in gray.

FIG. 1a illustrates a lane 102a that splits into two lanes 104a and 104b at split point 106a. The two lanes 104a, 104b travel to the left and right, respectively, of an obstacle 108d. FIG. 1b similarly illustrates a lane 102b that splits into two lanes 104c and 104d at split point 106b that exists at a different geometric location. The two lanes 104c, 104d travel to the left and right, respectively, of an obstacle 108d. However, while the lanes illustrated in FIG. 1a and 1b are geometrically different, they are topologically identical because they enter the same cells through the same edges, and can therefore be continuously deformed from the geometry of FIG. 1a to that of FIG. 1b and vice versa. Further, as illustrated in FIG. 1c, two separate lanes, 102d and 102e, can follow each other to the obstacle 108d, then travel to the left and to the right, respectively, of the obstacle 108d. The lane illustrated in FIG. 1c are topologically identical to the paths illustrated in FIG. 1a and 1b. Since they are topologically identical, they are represented with the same lane graph topology 102f, represented in FIG. 1d. Each segment (in blue) of the topology is a link. The connection between two links will be referred to as a node, which in FIG. 1a are illustrated as small circles, e.g., 109a, 109b). The arrow at the end of each branch of the graph indicates the orientation of all the links in the corresponding paths.

Any lane graph can be associated with a lane graph topology. This specification provides methods to ensure that this association is unique, including in cases of splits, merges, and intersections. Importantly, this specification provides a technique to enumerate all possible lane graph topologies, despite their potentially large number and great diversity. This property guarantees that the true lane graph is guaranteed to exist among the enumerated lane graph topologies. This specification further generalizes this enumeration to a search method, which can focus on exploring the most promising lane graph topologies first.

Cells, edges, links, and paths can be understood by analogy to a large house. The house can have multiple external and internal doorways, and the goal can be to find all routes through the house from one external door to another external door through one or more internal doors. In this analogy, the entrance edge represents the initial external door and exit edges correspond to other external doors of the house; cells correspond to rooms of the house; edges correspond to internal doors between rooms; links represent connections across rooms; and paths represent solutions to the problem - that is, information representing the rooms through which one can traverse from the entrance door to one or more exit doors.

If a hypothetical house were expanded to twice its size, or contracted to half its size, a path across the house - that is, which rooms are traversed and in which order -- would be unaffected. But the actual geometry of the route - for example, go two feet forward, turn 90 degrees clockwise, etc. - would change. Similarly, the exact spatial location of a door connecting two rooms is less important to the route through the house; instead, what matters more is that there exists a door between the two rooms. Therefore the techniques described in this specification are not sensitive to the exact choice of cellular decomposition used to represent the region of interest.

Unlike a topology, a geometry has properties that are related to distance, shape, size, and position of lanes. A topology can describe many geometries, and in fact, a topology often describes an infinite number of geometries. Therefore, it is a technical challenge to derive a limited set of lane geometries from a set of paths.

A geometric representation of a lane is important because a self-driving car must ultimately navigate actual roads, and considering geometric properties such as distance and shape is required for safe navigation.

This specification describes techniques used to determine, from a set of lane graph topologies, corresponding lane geometries available to a self-driving car navigating a drivable region of space potentially containing obstacles. Such a lane geometry can be used by a self-driving car to make navigation decisions, potentially in real-time. The techniques may be applied to a single lane, for instance, the lane that the self-driving car is currently following, or to an entire graph of lanes.

To create lane geometries, for each link in the lane graph topology, the specification describes techniques that can be used to create a corresponding polyline in the lane graph geometry. A polyline is a sequence of connected line segments and can be used to approximate the curved shape of a lane. Optimizations can then be performed on the polylines to jointly select the location of all the vertices to find the most likely shape of all drivable lanes through the region, including the location of any split point or merge point. If needed, a further smoothing step can convert the polylines to a smooth curve, as described below.

Returning to the house analogy, a path (a sequence of links) represents high-level instructions leading from an entrance to the house to an exit of the house, passing through doors that connect rooms ("go to this room, pass through that door... "). In contrast, a lane geometry would illustrate the exact route, including distances and headings that can be used to traverse the house. The lane geometry corresponds to a path - that is, it passes through the same rooms and doors - but provides more precise route information. Since there are numerous, and potentially infinite, possible lane geometries corresponding to a path, optimization can be used to find a preferred lane geometry. For example, the shortest lane can be preferred. Alternatively, in some implementations, the lane geometry can be obtained by minimizing a continuous score. For instance, the score may be the sum of a penalty for a lane passing too close to an obstacle, another penalty for a lane to change curvature too quickly, another for not remaining parallel to the curb, etc.

### Lane Graph Topology

FIGS. 1a, 1b and 1c illustrate lanes through a drivable region of space that all have the same topology. The three lanes illustrated in FIGS. 1a-c are an example of possible lanes that might be determined by a self-driving vehicle when encountering this drivable region. This specification describes how to efficiently represent all of these lanes using a single lane graph and how to determine the actual geometry of the lanes using geometric optimization to recover the actual shape of the lanes on the road.

It is important to note that, while the lane geometries in FIG. 1a, FIG. 1b and FIG. 1c differ, the system can consider them all to have a same lane topology.

FIG. 1d illustrates a common topology for the lanes illustrated in FIGS. 1a-c. The common topology is represented by a graph having a single tree of links having a root 110 at an entrance edge and one or more leaves 109a, 109b at corresponding exit edges. Each link starts and ends at an edge of the cellular decomposition. Although FIG. 1d draws each link with a specific shape and a specific location for its endpoints, the lane graph topology need not specify these details. Instead, the lane graph topology can merely specify the graph structure of the links. And although the actual lanes in FIGS. 1a-c had differing split points, they share a common lane graph topology, represented by a single tree. Since this one lane graph topology represents all three possibilities from FIGS. 1a-c, the first links of the tree, before the split node, can represent more than one lane. This fact generalizes to all other links, even after the split, so a link can represent more than one lane. Indeed, besides the lane graphs of FIGS. 1a-c, FIG. 1d can also represent lane graphs with additional splits. For instance, lane 104d could split, with both lanes exiting through the same exit edge. Since such a lane graph can be continuously deformed to move this additional split point forward until it completely exits through the exit edge, such a lane graph is topologically equivalent to that of FIG. 1b. All these possibilities are captured by the single representation of FIG. 1d.

For the graph representation of the lane graph topology shown in FIG. 1d to be unique, a choice regarding the location of a split point must be made. In some implementations, the system can generate the lane graph topology by choosing to place the split node 112 on the latest possible edge. Thus, the lane tree illustrated in FIG. 1d has a split point on the third edge through the region, which is sufficient to represent the split points in all of the examples in FIGS. 1a-c.

In some implementations, the system also places merge points as late as possible in the region. But because lanes may not actually merge at all before departing a region, the system can represent merging lanes by two paths that follow each other all the way to an exit edge, without the corresponding paths merging and sharing a link.

Therefore, a lane graph topology containing two paths exiting through the same exit edge corresponds to a family of lane graph geometries, including some lane graph geometries where the lanes do not merge, and some where they merge at various points along length. The two paths do not themselves merge, though they represent lanes that may merge.

Additionally, some cells may be designated as intersection cells, representing a roadway intersection. In intersection cells only, links are allowed to cross, thus representing lanes crossing each other. In all other cells, link crossing is forbidden, representing that the lanes corresponding to those links cannot cross. In some implementations, the system assigns only a single lane to links inside of intersection cells, contrary to links outside of intersection, as discussed above. This choice simplifies the enumeration and search techniques described below, and derives from the general property of intersections on the road that lanes are fully separated as they enter or exit an intersection.

Which cells to designate as intersections can be determined in different ways. When it is determined that the location of an intersection in a lane graph has not changed since the last time the intersection was mapped, then the location of intersections on a map can be used. In other cases, this designation may be determined from context. For instance, conventional machine learning models can recognize the shape of curbs and markers around intersections, or recognize the presence of traffic lights or stop signs. Alternatively, the presence of an intersection may be determined from the trajectories of other vehicles, when such trajectories are observed to cross.

Lanes can merge inside of an intersection. For instance, at a standard 4-way intersection, each lane approaching the intersection splits into a left turning lane, a forward lane, and a right turning lane. The right turning lane then merges with the forward lane coming from the left and the left turning lane coming from the opposite direction. Again, because lanes entering or exiting an intersection must be fully separated, such a lane graph cannot be continuously deformed into one where the merge point is before or after the intersection. For this reason, lanes merging inside an intersection can be represented by merging paths, where the links corresponding to the three lanes involved in the merge all point to the same node. Therefore, links can merge inside intersections.

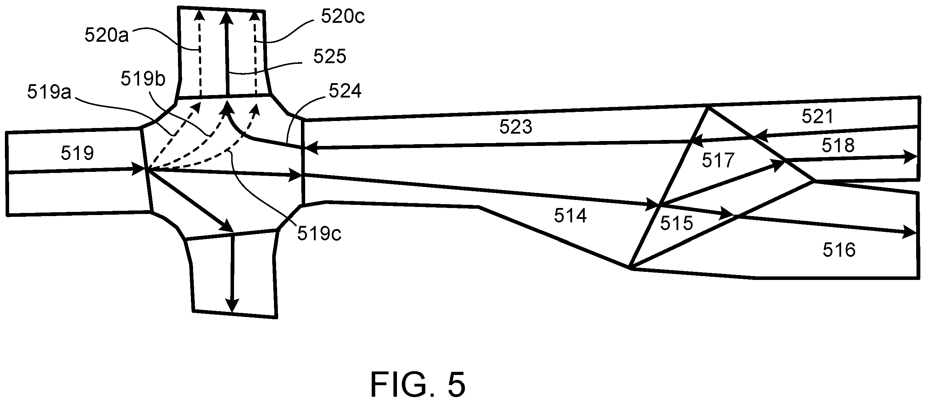

A lane graph topology can contain multiple paths, with each path representing a lane or group of lanes. FIG. 5 illustrates a lane graph topology with several paths, starting at different entrance edges. It also shows links merging inside the intersection.

### The Search Tree

Representing all of the lanes in FIGS. 1a-c with a common topology allows the system to enumerate the possible lane graph topologies efficiently. A simple example is presented below, and then the technique is generalized by introducing a data structure that will be referred to as a search tree.

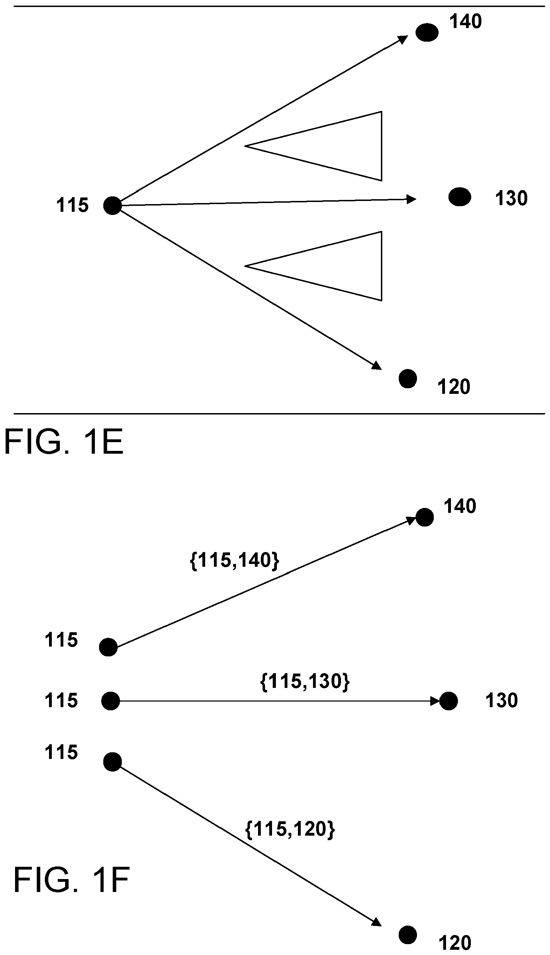

FIG. 1e shows a simple example with no intersections and a single entry. FIG. 1e represents a region of space that a lane may traverse on either side of a pair of obstacles. FIGS. 1f-1j illustrate the distinction between enumerating paths and enumerating lane graph topologies, as explained below.

Enumerating paths requires only a standard graph enumeration algorithm, such as a depth first search, to enumerate all possible paths between the entry point 115 and the exit points 120, 130, 140. As shown in FIG. 1f, the possible lane paths are {115, 120}, {115,130} and {115, 140}.

Enumerating lane graph topologies requires enumerating all possible combinations of paths - that is, while each individual path will flow from an entry to an exit, multiple paths can coexist. This is because some of the paths that correspond to drivable regions might not actually be lanes on the road that a vehicle is allowed to traverse, e.g., because the region is too narrow to contain a lane or because a lane for that path would violate a rule used during the evaluation process. Therefore, the system can enumerate all possible combinations of paths in order to guarantee that the true lane graph topology is among the lane graph topologies that are considered.

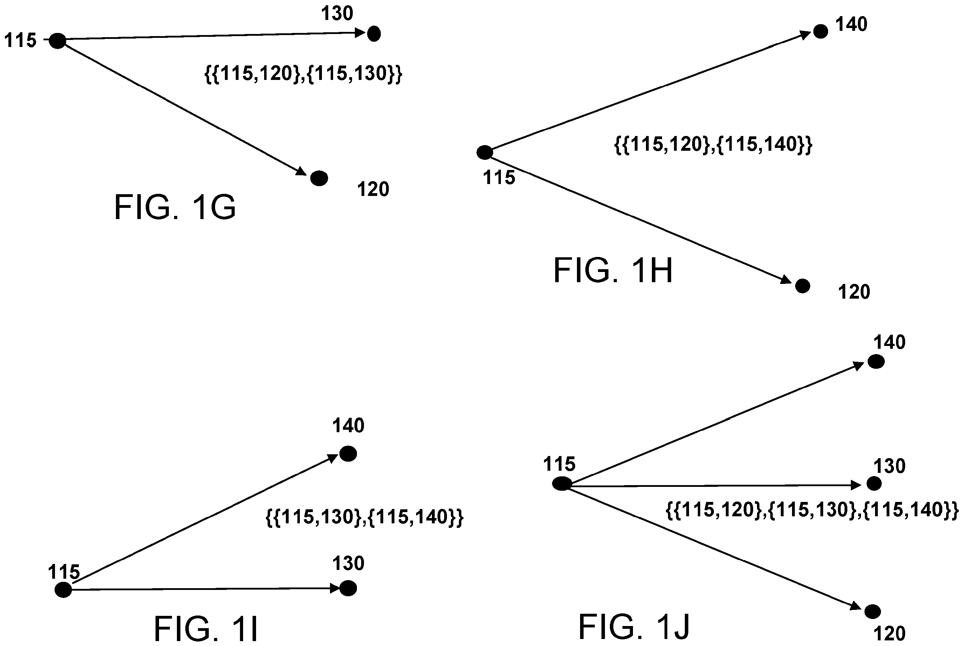

Therefore, the enumeration of lane graphs in this example includes the enumeration of lanes from FIG. 1f, {115, 120}, {115,130} and {115, 140}, and also the enumeration of the various combinations of lanes, and illustrated in FIGS. 1g-1j. Combining these enumerations yields the full set of lanes graphs: { {{115, 120}}, {{115,130}}, {{115, 140}}, {{115,120},{115,130}}, {{115,120},{115,140}}, {{115,130},{115,140}}, {{115,120},{115,130},{115,140} }.

Optionally, a null graph, {{}}, can be included to indicate the possibility that no lanes through the topological space exist. In the remainder of this description, the null graph is implicitly understood to be one of the possibilities but its discussion as a candidate is omitted for brevity.

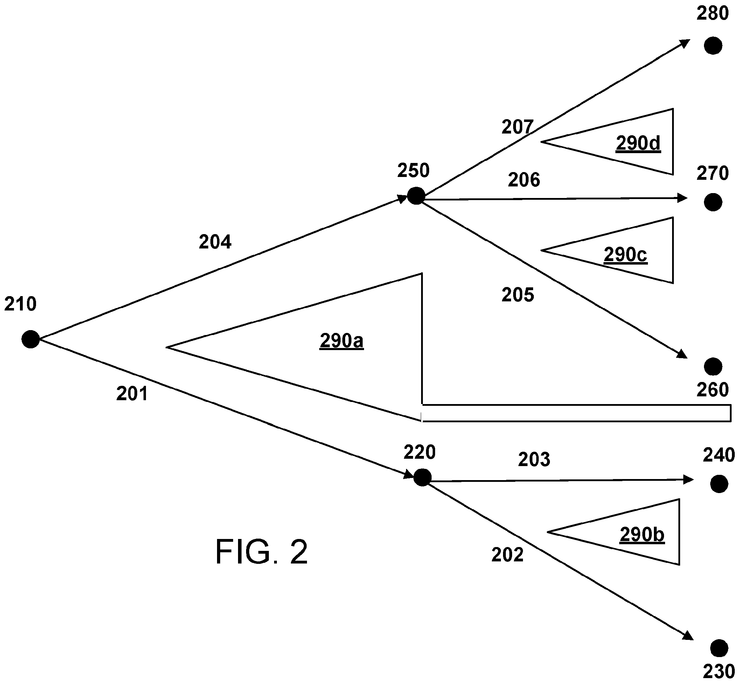

FIG. 2 is a diagram of a topological representation of a region of space. The region has one entry 210, and five exits, 230, 240, 260, 270, 280. In this example, the topological positions of obstructions 290a-290d create branches for a path to proceed from entry to exit. Examples of paths include {201,202} connecting nodes {210,220,230}, {201, 203} connecting nodes {210, 220, 240} and {204,205} connecting nodes {210, 250, 260}.

A lane graph topology is defined to be complete if every link connects either to an exit edge or to another link. Otherwise, a lane graph topology is defined to be incomplete. For example, a lane graph topology containing only links {201, 202, 203, 204} is incomplete because link 204 does not connect to any other link, and therefore node 250 does not have any outgoing link. However, adding link 205 to this incomplete graph makes it complete because link 205 ends at an exit. As explained below, incomplete lane graph topologies are useful as intermediate data structures used when generating complete lane graph topologies. In other words, a lane graph topology is incomplete if it includes paths that do not reach an exit.

The enumeration and search processes described below can generate both complete and incomplete lane graph topologies by adding a single link at a time. A complete lane graph topology can be constructed by adding one link at a time, thus creating a sequence of lane graph topologies starting with the empty lane graph topology and continuing to produce progressively larger complete and incomplete lane graph topologies. Therefore, techniques that start from the empty lane graph topology and add links can, in principle, construct all possible complete lane graph topologies. This remains true even in the most complex cases where the region of space includes multiple entries and intersections. Operating on incomplete lane graph topologies can reduce the search space because if an incomplete topology violates an evaluation rule, all complete topologies generated from the incomplete topology are also invalid and therefore do not need to be considered. Thus, as soon the system discovers an incomplete topology that is invalid, the system can prune the search space by skipping evaluation of all complete topologies generated from the invalid incomplete topology.

A link can be added to a lane graph topology with a new pair of nodes on different edges of a cell. The new pair of nodes can include a newly added node or an existing node. For example, a link can be added by inserting a new node in an entrance edge, then creating a link starting at the new node and ending at a node of one of the other edges of the cell. Alternatively a link can be added at an existing node and ending at another node at one of the other edges of the cell.

The location of the end point of the link can be chosen among a set of possibilities that include: merging into an existing node for another link, pointing to a new node located along an edge with no other node, pointing to a new node located to the left or to the right of an existing node along an edge.

These alternatives for which node is the end point of a link can have an ordering ordered from left to right starting at the start node of the link and ending again at the same start node after going around the cell, through each edge of the cell and through each location on or between nodes on these edges of the cell. When the cell to which the link is being added contains many edges, or many existing nodes in each edge, there can be many such possibilities.

If the cell is not an intersection, crossing is forbidden; therefore, many of these possibilities are invalid and can be ignored. However, in an intersection cell, many of these possibilities must be considered.

It is computationally desirable to generate each possible lane graph topology only once. This can be achieved by imposing a fixed order in which to add links. Such an order is a form of a symmetry breaking constraint. In some implementations, this order can be a fixed-root depth-first left-to-right order. Fixed-root means that all entrance edges of the region are considered in a fixed order, so that all the links reachable from the first entrance edge are added before any link reachable from the second entrance edge is added, and so on. In particular, it implies that a link can be added only if it starts at an entrance or if it starts at an existing node, thus connecting with the endpoint of a previously added link. Depth-first means that links are added in priority to nodes that do not have any outgoing link and are not on an exit edge. Such nodes are called incomplete nodes. In particular, in this approach, incomplete lane graph topologies visited using this method can contain only one incomplete node. It also means that branches of the lane graph topology are extended until completion before any other branch is started, hence the term depth-first. Left-to-right order means that a link added as an outgoing link of an existing node must be the rightmost such outgoing link for that node. These choices ensure that each complete lane graph topology can be generated in only one way, starting from empty. In other implementations, this fixed ordering can be based, for example, on breadth-first or right-to-left orders, or other orders, provided they establish a unique sequence from the empty lane graph topology to every possible complete lane graph topology.

A search tree is a collection of all complete or incomplete lane graph topologies reachable by adding links as described above, with the restrictions, also as stated above. In the context of the search tree, each lane graph topology belonging to the search tree is also called a search node. The search tree is a broader concept than a single lane graph topology. Its root search node is the empty lane graph topology. The children of a search node A correspond to all lane graph topologies that can be obtained by adding a single link to A, subject to the ordering restriction listed above. Since each complete lane graph topology can be constructed in only one way, there is only one sequence of search nodes leading from the root to any particular complete lane graph topology. Therefore, the search tree is indeed a tree. The structure of this tree depends on the ordering choices discussed previously, and can be produced, for example, using fixed-root depth-first left-to-right order. The search tree contains all possible lane graph topologies for a given drivable region.

### Lane Graph Topology Enumeration

Lane graphs can be enumerated using various techniques. In some implementations, the enumeration follows the search tree described previously. Given a previously created search node, all its children nodes can be created by adding any link that satisfies the symmetry breaking constraint. In turn, the children of these new search nodes can also be created in the same way, thus ultimately creating the entire search tree. This procedure to generate the entire search tree introduces yet another choice: which children to create first, or more generally which branches of the search tree to create first. As noted above, a branch of a search tree is a sequence of search nodes, each of which is an entire lane graph topology; it is not the same as a branch of a lane graph topology, which is a sequence of links. In some implementations, the branches of the search tree can be explored in depth-first left-to-right order. Depth-first within the search tree means that as many links are added as possible, before reconsidering search nodes with fewer links. Left-to-right means that if a link is added to an existing node and its endpoint can be made to reach several different edges of that cell or different nodes within a given edge, these possibilities will be considered one at a time in left-to-right order. Other implementations may use a different ordering. The choice of ordering does not affect the completeness of the enumeration, only which lane graph topologies are generated first.

In some applications of the techniques described in this specification, storing all the lane graph topologies created in this manner may exceed available memory. To greatly reduce memory use, the search tree can be traversed entirely while only storing a single lane graph topology at a time. To achieve this result, whenever a lane graph topology is created, its parent search node in the search tree is not saved. Despite not having been saved, the parent can be recovered by examining the child lane graph topology, identifying which link was added last, and removing that link. Identifying the link can be accomplished simply by recording the order in which links are added, for instance using a stack data structure, and can also be recovered based on the symmetry breaking constraints (described above). For instance, if the chosen symmetry breaking constraints call for links to be added depth-first left-to-right, then the last added link is found by following the lane graph topology in depth-first right-to-left order. Regardless of the chosen symmetry breaking constraint, it is possible to explore a branch of the search tree and later backtrack to explore other branches, while storing a single lane graph topology at a time, as described above.

The resulting constant-memory enumeration algorithm can be expressed more succinctly without explicitly referring to the search tree, as follows. Start with the empty lane graph topology. Thereafter, if the lane graph topology is incomplete, add a link to the incomplete node, with its endpoint in the leftmost possible location reachable from that node. Otherwise (if the lane graph topology is complete), find the next link to add according to the symmetry breaking constraints. This link will either start at a new node in an entrance edge, or it will be a new outgoing link from an existing node, in which case it will be the rightmost link of that node, while its endpoint will be the leftmost reachable location among the edges of that cell. If no such link can be added, because no location is available for the endpoint of a new link, then backtrack as follows: delete the last added link, and replace it with a link coming out of the same node as the deleted one, but pointing to the next available location to the right. If there are no available locations, continue backtracking until a new link can be added.

Additionally, each time a lane graph topology is created, it can be checked for violations of various constraints, such as drive-on-right, no crossing outside of intersections, etc. Such constraints can be called negative constraints, because they describe properties that the lane graph topology must not have. A single violation means not only that the current lane graph topology is forbidden, but that any other lane graph topology obtained by further adding links will still be forbidden. As a result, when a negative constraint is violated, the search tree need not be explored beyond that search node. The entire branch of the search tree can be pruned, yielding computational efficiencies.

This approach provides a complete enumeration of the lane graph topologies corresponding to all possible lane graphs passing through a given drivable region.

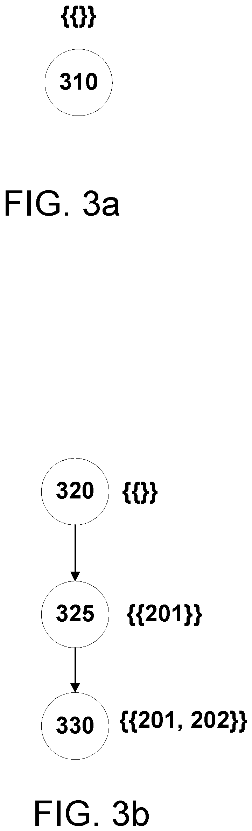

FIGS. 3a - 3e are diagrams illustrating the method of creating a search tree for a drivable region of space, and specifically, the development of a search tree corresponding to the topology illustrated in FIG. 2. FIG. 3a shows the root of the tree, which, because it contains only the root node 210 of FIG. 2 and no links, is empty.

FIG. 3b shows the state of the search tree after completing the first depth-first pass. The search tree now contains three search nodes, {}, {201} and {201,202}. Because an exit has been reached at the end of link 202, the process backtracks to link 201. As noted in the description of the constant memory enumeration algorithm, the system can delete the link 202 because it was added last. The next link can therefore be added to search node {201 }.

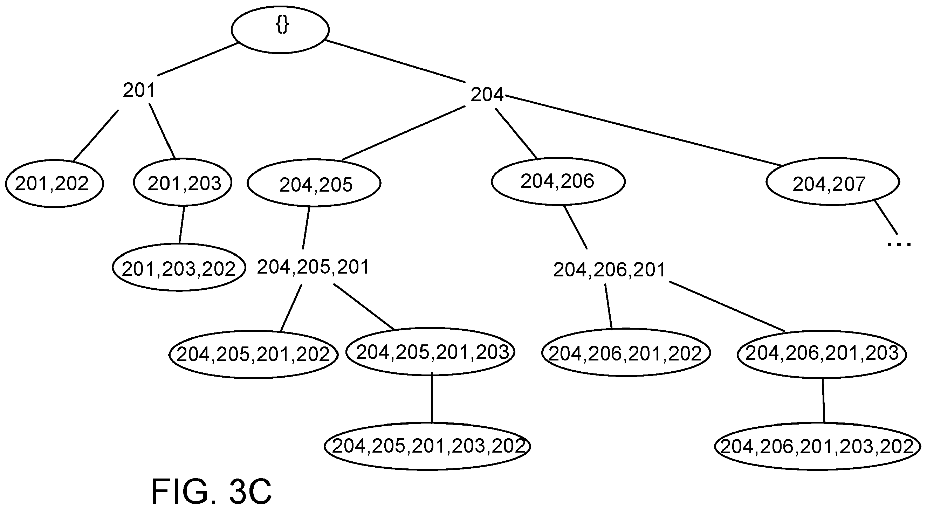

FIG. 3c uses the link representation to show the state of the graph after the process backtracks and enumerates the additional possibilities: a lane graph topology with links terminating at node 240, and one with both branches, terminating at nodes 230 and 240. The circled entries in the graph indicate complete lane graph topologies. The process again backtracks to link 201 then to the root node 210, which corresponds to the empty graph {}. Note that it is not sufficient to explore only the top branch - that is, the branch contains link 204 - as that would miss alternatives that include both the top and bottom branches.

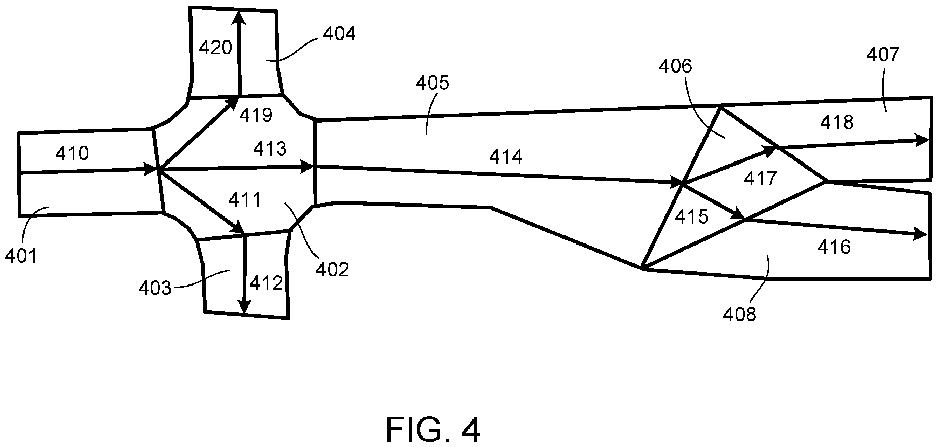

FIG. 4 is a diagram of a cellular decomposition of a drivable region, in this case, a region containing more complexity than the prior examples. The region in the illustration has 8 cells numbered 401-408, including a cell 402 that is an intersection.

When executing against the region illustrated in FIG. 4, the enumeration algorithm produces lane graph topologies starting with an empty lane graph topology. Using a fixed-root order that starts with the entrance edge on the left, the first non-empty lane graph topology will contain a link 410 starting at that edge and crossing cell 401. Because adding that link creates an incomplete lane graph topology, the next lane graph topology must be obtained by adding a link 411 in cell 402, connected to link 410. Link 411 points to the rightmost location available within cell 402, according to the right-to-left exploration ordering. Again this creates an incomplete lane graph topology, so another link 412 must be added, making the lane graph topology complete. At this point, no link can be added, so the algorithm backtracks and moves the tip of link 412 to its next available location within cell 403. Since there is no such location, the backtracking continues to link 411, whose tip can move within cell 402 by being deleted and replaced by link 413. The path starting at link 413 is then progressively extended until link 416 makes the lane graph topology complete again. That lane graph topology contains a single path starting at 410 and ending at 416. The next operation according to the symmetry breaking constraints is to add a link in the rightmost depth-first available location, which is again link 411. Since the lane graph topology is incomplete, link 412 is then added as well. This lane graph topology is now complete. It has two paths sharing link 410. Note that the links of this lane graph topology have indeed been added in depth-first left-to-right order, according to the symmetry breaking constraints. The next backtracking sequence deletes links 412, 411, 416, 415, and inserts link 417. This process eventually generates all the possible lane graph topologies. Different choices of symmetry breaking constraints and exploration ordering merely change the order in which those lane graph topologies are produced, and in all cases, all lane graph topologies will be produced.

FIG. 5 is a diagram of a cellular decomposition of a drivable region showing a region similar to the region in FIG. 4 but also including a path 521-525 that has previously been determined to run right-to-left. In this example, link 519 has three possible locations to which it can point within the same edge: 519a-519c. Link 519a represents a lane emerging from cell 502 into cell 504 parallel to the lane represented by link 525. Link 519b represents a lane merging with link 524 to emerge as the same lane as that represented by link 525. This case is only allowed if cell 502 is an intersection, as its shape suggests. Link 519c represents a lane crossing that is represented by link 524, and emerging as a neighboring lane to that represented by link 525. Such crossing is typically only allowed in large intersections, and would normally require that merging 519b is also allowed. If a constraint is introduced to enforce such a condition, link 519c may or may not be allowed, depending on the presence of link 519b.

Finally, for each lane graph topology created, a score can be assigned. A lane graph topology score can represent the likelihood that a lane graph is the correct lane graph through the drivable region.

For example, a positive contribution to the score can be awarded for each additional path. A higher score can also be awarded for a first path that, in combination with a second path, results in lanes traveling through an edge in both directions. In another example, a higher score can be awarded for shorter paths, and decreasing scores awards for increasingly long paths. In addition, higher scores can be awarded for a part of a lane graph that is known to be accurate, for example, because it can be determined that nothing has changed in that region since it was last mapped, or because of observed traffic, which provides lane direction.

External information such as "keep left" or "no right turn" signs can be used as constraints to reject any lane graph topology that appears to violate the sign, or it can be used as a score to merely penalize such lane graph topologies.

Once a most likely, or highest scoring, lane graph topology has been created and selected, it can be used by itself to answer important questions, such as whether a vehicle can traverse the drivable region in a particular direction, or whether the goal of a self-driving vehicle can be reached from its current location. However, that lane graph topology does not provide an exact location for the lanes that must be followed to reach a particular goal, nor even in some cases does it specify the number of parallel lanes through a particular corridor of the drivable region. The geometric optimization section below provides techniques for determining such precise location information.

### Lane Graph Topology Search

The enumeration techniques described above are based on the search tree, and explore its search nodes one-by-one exhaustively. When enumerating all possible lane graph topologies would require computations that exceed typical completion-time constraints, in particular when a real time result is required, a more general search algorithm can be used. Conventional search algorithms maintain a candidate set of search nodes that have been created but have not yet been explored, in the sense that the branch of the search tree starting at that search node has not yet been visited. At each iteration of the search algorithm, a search node is selected to be explored and its children become part of the candidate set. Search algorithms differ mainly in the order in which they pick search nodes within the candidate set to be explored next. In some implementations, the candidate with the highest score may be explored next, or the candidate with the highest score with a penalty for the number of links.

Just as the enumeration algorithm can be implemented implicitly without representing the search tree or using memory to store its search nodes, any search algorithm acting on the search tree can also work implicitly and therefore more memory efficiently. Indeed, the constant memory enumeration algorithm can be run and, when a lane graph topology is created, instead of continuing to explore the branch of the search tree starting at that search node, that lane graph topology can be saved for later exploration, with the backtracking portion of the enumeration algorithm proceeding instead. When, later, that search node is selected from among the candidate set by the search algorithm, the exploration of that branch of the search tree can resume, using again the method of the constant memory enumeration algorithm. The decision to continue to explore a search node or to save it for later can be made, for example, based on the score.

In some implementations, to produce results that approximate an optimal solution while reducing the consumption of computing resources, the search can be stopped after a fixed amount of time or after a fixed number of search nodes have been explored. Such an approach does not guarantee that the correct lane graph will have been produced and scored; however, by exploring the most promising search nodes earlier in the search, the search can maximize the likelihood that the correct lane graph, or a close approximation, will be produced.

### System Description

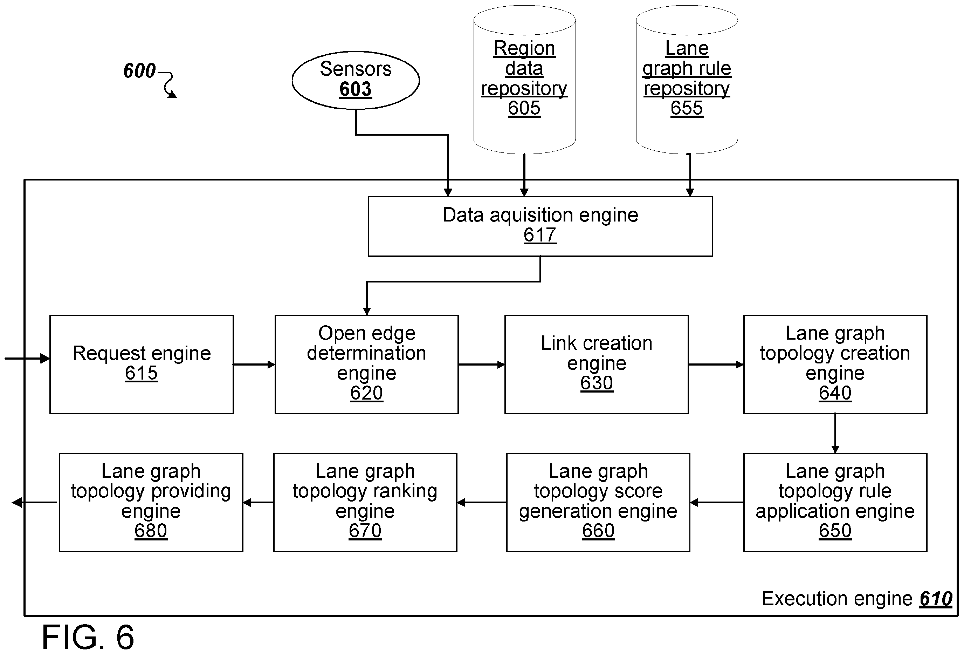

FIG. 6 illustrates an example system 600 that can determine lane graph topologies through a drivable region of space. The system can include an execution engine 610 and one or more repositories 605, 655.

A request engine 615 in the execution engine 610 can accept requests to produce lane graph topologies. In some implementations, the request can be included in an HTTP request. In some implementations, the request can be made through an Application Programming Interface (API) provided by the request engine 615.

A data acquisition engine 617 in the execution engine 610 can receive data representing a region of space, "region data," where the region can contain a plurality of road obstacles. The region data can be obtained, for example, by processing data from sensors 603, such as sensors in a self-driving car that is navigating a region of space for which it has no map or an incomplete map. The region data can include data representing a plurality of cells that represent interconnected, drivable regions separated by a set of road obstacles. Each cell can include a plurality of edges that represent a drivable connection between two cells.

Region data can also include triangulation data. A triangulation of a region is the decomposition of cells into a set of triangles. For example, the Delaunay triangulation is a common method to obtain a triangulation. It can be constrained to force some edges to be included, such as edges along obstacles, and to ensure that each triangle only contains a drivable region without obstacle.

The region data can be stored in a region data repository 605 external to the execution engine 610. For example, the repository can be a relational database, and the execution engine 610 can receive the region data by querying the database. Alternatively, the region data can be stored in a repository comprising a database stored internally to the execution engine 610 and retrieved using an appropriate query language. In another alternative, the region data can be stored in a file system internal to the execution engine 610 or external to the execution engine 610, and retrieved using file system calls. In yet another example, the system can support an application programming interface (API) that accepts region data as input. Region data can also be stored internally to the system and can be generated, for example, in real-time by a self-driving car as it is mapping its surroundings. In addition, existing region data can be augmented in real-time by a self-driving car as it is mapping its surroundings.

Region data can also be created externally to the execution engine 610, for example, by applying cell decomposition to a model of a drivable region. Cell decomposition can partition the drivable region into contractible faces called cells. Note that a cell (i.e., a contractible face, or a "room" in the prior analogy) can touch an obstacle, but cannot fully contain an obstacle.

An edge determination engine 620 can evaluate the region data to detect edges present in the region data. The region data can explicitly identify edges. Alternatively or in addition, the edge detection engine 620 can identify edges by analyzing other information in the region data. For example, if the region data includes two adjacent cells, C1 and C5, and the connection between C1 and C5 is not completely obstructed, then the edge detection engine 620 can infer the existence of an edge between C1 and C5.

A link creation engine 630 can create links between the edges identified by the edge determination engine 620. For example, a link creation engine 630 can create a link between two edges bordering a common cell. In some implementations, a link creation engine will, for all cells in the region data, create links between all pairs of edges of a cell. Alternatively, or in addition, the system 600 can receive region data that includes an identification of some or all links.

A lane graph topology creation engine 640 can analyze the region data, edges and links to create lane graph topologies. A lane graph topology can represent a set of drivable paths across the drivable region, as described in reference to FIGS. 1-3. A lane graph topology can contain a collection of lane path that extend from one exit edge to a second exit edge though zero or more edges. The lane graph topology creation engine 640 can store lane graph topologies in a data structure such as a list or a tree.

Optionally, a lane graph topology rule application engine 620 can apply rules to the lane graph topologies created by the lane graph topology creation engine 640. A rule can, for example, state that two lanes cannot cross except within a cell denoted as an intersection, or that, for region data relevant to the United States, lanes must obey "drive on the right." The lane graph topology rule application engine can remove lane graph topologies that fail at least one lane graph topology rule.

Lane graph topology rules can be stored in a lane rule data repository 655 external to the execution engine 610. For example, the repository can be a relational database, and the execution engine 610 can receive the lane rules by using SQL calls directed to the database. Alternatively, the lane rule data can be stored in a repository comprising a database stored internally to the execution engine 610 and retrieved using a query language, e.g., SQL. In another alternative, the lane rule data can be stored in a file system internal to the execution engine 610 or external to the execution engine 610, and retrieved using file system calls. In yet another example, the system can support an application programming interface (API) that accepts lane rule data as input. In some implementations, when the lane rule data repository 655 is external to the execution engine 610, the execution engine 610 retrieves and stores the rules internally. Storing the rule internally allows the execution engine 610 to execute in real-time to assist in the navigation of a self-driving car.

A lane graph topology scoring engine 660 can compute scores for a plurality of lane trees. A lane tree score can represent the likelihood that a lane tree is the most likely lane tree through the drivable region.

A lane graph topology ranking system 670 can create an ordering of lane graph topologies based on the scores created by the lane graph topology scoring engine 660. For example, the lane graph topology ranking system can order the lane graph topologies such that the lane graph topology with the highest score is ordered first, and other lane graph topologies are ordered in decreasing order of lane graph topology score. Optionally, the lane graph topology ranking system can eliminate lane graph topologies with scores below a given threshold.

A lane graph topology providing engine 680 can provide one or more lane graph topologies. The lane graph topologies can be expressed as a tuples of lane paths, such as was illustrated in reference to FIG. 5.

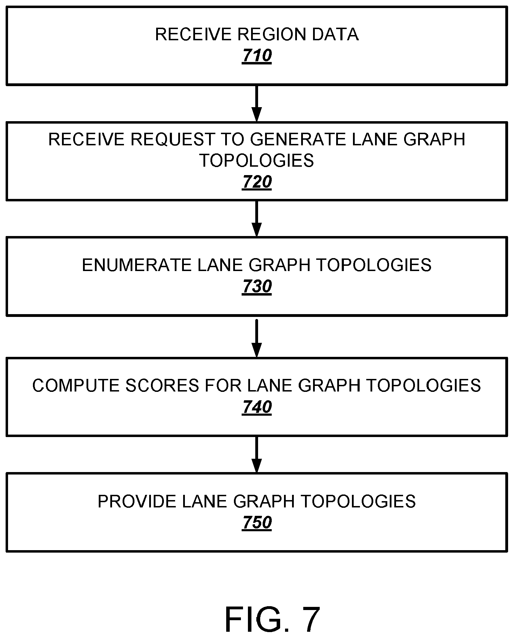

FIG. 7 is a flowchart of an example process for enumerating and scoring lane graph topologies. The process will be described as being performed by a system of one or more computers, such as the system illustrated in FIG. 6. For example, an onboard navigation system of a self-driving car could perform the example process to enumerate in real-time the candidate lane trees for a drivable region and determine which is the most likely.

In operation 710, the system receives region data. As explained above, region data represents properties of the drivable region including cells (drivable regions that can touch an obstacle, but cannot fully contain an obstacle), edges between cells (i.e., if there exists a drivable region between cell A and cell B, there exist an edge between cell A and cell B), and exit edges (i.e., a drivable region between a cell and the boundary of the drivable region).

Region data can be represented as tuples. For example, a cell is represented as {Cell, C1} or {Cell, C2}; edges are represented as {Edge, C1, C2} indicating that there is an edge between cells C1 and C2; and exit edges can be represented as {ExitEdge, C1} indicating that there is an edge between the cell C1 and the boundary of the region.

In some implementations, explicit identification of cells can be omitted, and the existence of a cell inferred from its listing in an Edge or ExitEdge. For example, the statement {Edge, C1, C2} indicates both the existence of cells C1 and C2 and the edge between them.

In other implementations, explicit identification of both edges and cells can be omitted, and the existence of an edge is inferred from a listing of cells. For example, the tuple {C1, C2} indicates that cells C1 and C2 exist and that there is an edge between them. A listing of a single cell, such as {C1} indicates that there is an exit edge into cell C1.

Region data also include geometric representations of the boundaries of the drivable region and of the obstacles. The boundaries can be expressed as a description of line segments that comprise the boundary of the region or an obstacle.

In operation 720, the system receives a request to generate lane graph topologies. The system can receive the request using any conventional request technology. For example, if the system is executing on a vehicle, such as an autonomous vehicle, the system can receive a request over a physical connection between components of the vehicle. Alternatively, if the system external to a vehicle, the system can, for example, include a web server that accepts requests over HTTP. In another example, the system can provide an Application Programming Interface (API) and accept requests through API calls.

In operation 730, the system enumerates lane graph topologies. This process was explained in detail in reference to FIGS. 1-4.

In operation 740, the system assigns scores to one or more of the enumerated lane graph topologies. The process of assigning scores was explained in reference to FIG. 5.

In operation 750, the system provides one or more lane graph topologies. In some implementations, the system can provide all lane graph topologies generated in operation 730. In some implementations, the system can provide a configured number, N, of lane graph topologies, and the system can provide the N lane graph topologies with the highest scores. In some implementations, the request received in operation 720 can include the desired number of lane graph topologies, and the system can respond with that number of lane graph topologies. Optionally, each score (generated in operation 740) associated with a provided lane graph topology can also be provided.

### Lane Graph Geometry Initialization

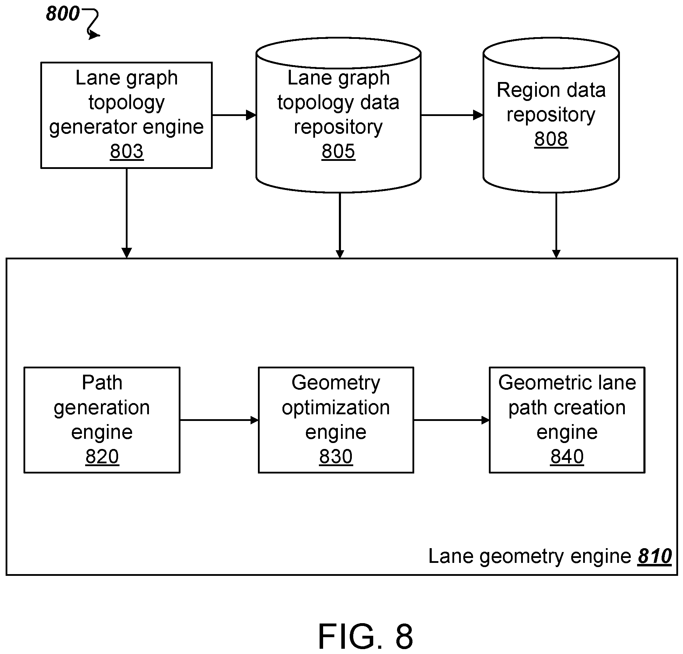

FIG. 8 illustrates an example system 800 that can determine lane geometry from lane topologies. The system 800 can include a lane geometry engine 810 and a lane graph topology generator 803, and can also include a lane graph topology data repository 805 and a region data repository 808.

The lane geometry engine 810 can execute on a vehicle such as an autonomous vehicle, and generates lane geometries from lane topologies. The lane geometry engine 810 receives data representing lane graph topologies, for example, from a lane graph generator engine 803 such as the system 500 described previously.

Alternatively, a lane graph topology generator engine 803 can produce lane graph topology data and store that data in a lane graph topology data repository 805. The lane geometry engine 810 can retrieve the data from the lane graph topology data repository 805 external to the lane geometry engine 810. For example, the repository can be a relational database, and the lane geometry engine 810 can receive the lane graph topology data by using SQL calls directed to the database. Alternatively, the lane graph topology data can be stored in a repository such as a database stored internally to lane geometry engine 810 and retrieved using SQL. In another alternative, the lane graph topology data can be stored in a file system internal to the lane geometry engine 810 or external to the lane geometry engine 810, and retrieved using file system calls. In yet another example, the lane geometry engine 810 can support an application programming interface (API) that accepts lane graph topology data as input.

The lane geometry engine 810 can also acquire geographic region data from one or more region data repositories 808. The geographic region data can include geographic details about the region such as the location of obstacles and the location of the boundary of the region. As noted previously, the region data can also include a triangulation of the region. The lane geometry engine 810 can acquire the data using techniques directly analogous to those used to acquire lane graph topology data, including retrieving the geographic region data from an external or internal repository. The triangulation can be made to coincide with the cellular decomposition, so that edges of the cellular decomposition are also edges of the triangulation, in which case the triangulation is a refinement of the cellular decomposition, with each cell further decomposed into triangles.

Geographic region data can be determined from a map of the region that is stored in a region data repository 808 or it can be cached by the lane geometry engine 810. To avoid retrieval delays, the latter can be preferable in some implementations, such as those used by real-time navigation.

The path generation engine 820 takes lane graph topology data and creates initial geometric lane paths that consist of polylines. The path generation engine 820 creates vertices positioned on each triangulation line crossed by a path of the lane graph topology. The path generation engine 820 then connects the vertices to form an initial polyline, representing a lane geometry. The path generation engine 820 can perform this operation for a plurality of paths within a lane graph topology.

The geometry optimization engine 830 takes an initial geometric lane path and create an optimized polyline. The geometry optimization engine 830 can determine the shortest polyline that connects the vertices created by the path generation engine. Alternatively the geometry optimization engine 830 can determine the straightest polyline that connects the vertices created by the path generation engine, or it can determine the polyline that minimizes some cost function.

The geometric lane path creation engine 840 can take the optimized polyline and create a lane graph topology by determining from the polylines the locations where the polylines split and merge, thus determining the network structure of the lane graph. The geometric lane path creation engine 840 can also project the polyline onto the geographic region data and represents the aggregate data in a format suitable for use by the self-driving system.

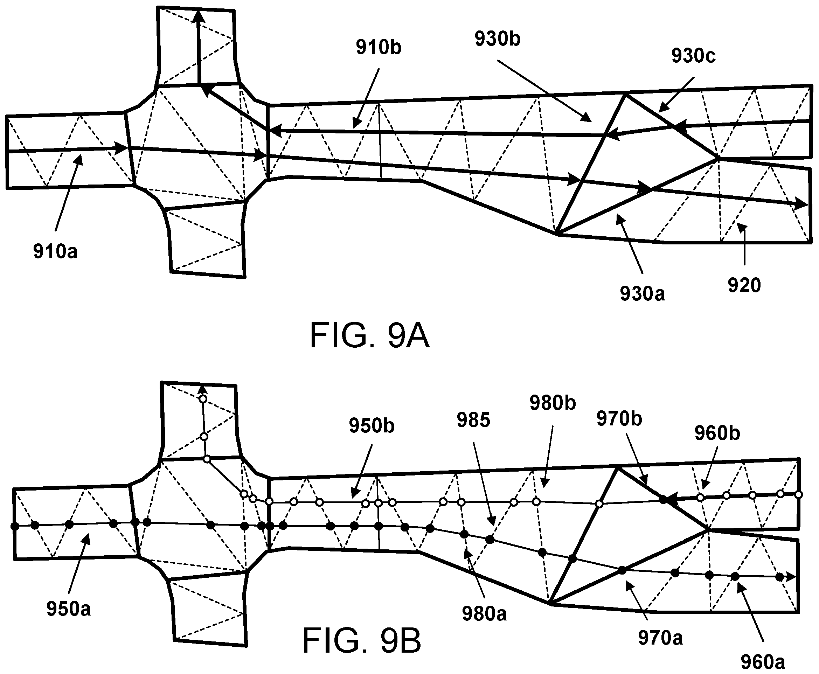

FIG. 9a illustrates paths through a drivable region of space. The region contains topological representations of two lanes 910a and 910b running in opposite directions. The first lane 910 traverses edges 930b and 930a while the second lane 910b traverses edges 930c and 930b.

FIG. 9b illustrates lane geometries through a drivable region of space. Two lane geometries, 950a and 950b follow the same topological paths as their counterparts in FIG. 9a (lanes 910a and 910b). Lane 950a traverses a set of vertices such as 970a on an edge and 960a on a triangulation line. Similarly, lane 950b traverses a set of vertices such as 970b on an edge and 960b on a triangulation line. Both lanes 950a and 950b are polylines composed of line segments connecting all vertices along their paths.

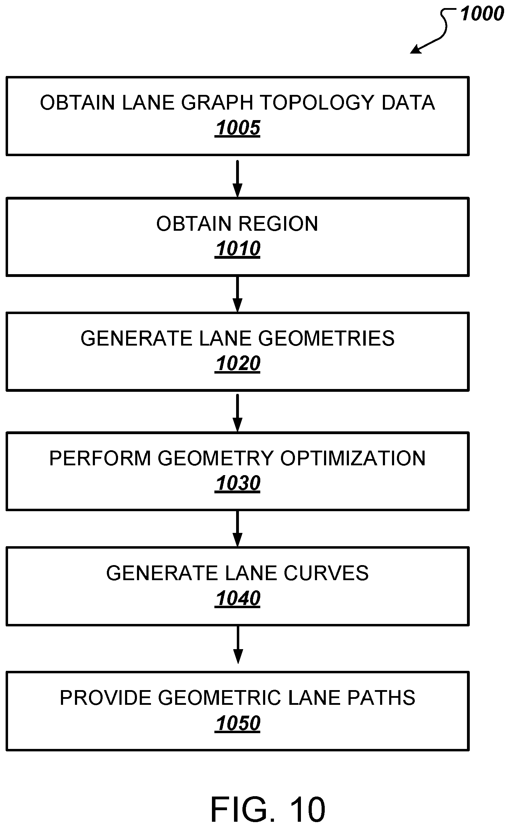

FIG. 10 is a flow diagram of an example process that determines a lane geometry through a drivable region of space.

The system obtains lane graph topology data 1005 such as lane graph topology data through the drivable region as produced by the system of FIG. 6 and described further in reference to FIG. 7. The lane graph topology data can be expressed as a set of links between edges, connected by nodes.

The system obtains region data 1010 analogously to operation of the system of FIG. 7, and region data are described above in reference to step 710 of FIG. 7. As noted previously, region data include a geometric representation of the drivable region.

The system next generates 1020 a candidate list of lane geometries from the lane graph topology. Each path in the lane graph topology can initially be assigned a geometry for a single lane, in the form of a polyline. As described previously, the vertices of the polyline fall on triangulation lines. In some implementations, more vertices can be added in the interior of cells, though placing vertices only on triangulation lines is sufficient to guarantee that successive vertices have line of sight to each other through a single triangle, which in turns guarantees that the polyline does not intersect any obstacle.

The location of a vertex can be further constrained to remain farther from either end of the corresponding triangulation line than half a minimum allowable lane width. Indeed, because triangulation lines touch obstacles at either end, placing a vertex of the polyline any closer would cause the lane to impinge on an obstacle.

In addition, when there is a split point in the lane graph topology (for example as illustrated by split point 106a in FIG. 1A, split point 106b in FIG. 1B, and as two lanes 102d, 102e in FIG. 1C), the system can treat the split as two lanes (as shown by 102d and 102e in FIG. 1C) traversing the same path, with each lane represented by a polyline. The two polylines together represent the topology of a family of geometries. Depending on the placement of the vertices, the polylines can represent any geometry within this family of possible geometries. If the vertices of the two polylines coincide along a portion of the path, the two lanes can be considered to be the same lane until their final coinciding vertex, which can be considered the split point between the two lanes. If the polylines are separated, the lanes can be considered separate neighboring lanes that eventually diverge.

The two polylines extend backward from the split point in the lane graph topology until either the start of the path is reached at an entrance edge, or the path enters or exits an intersection. Indeed, as noted previously, inside intersections, links represent single lanes.

The geometric representation described above also induces inequality constraints on the position of vertices. When the two polylines must eventually separate, one polyline keeps to the right and the other polyline to the left. This left-right relationship extends to all the vertices of the two polylines before N. The list of these left-right relationships can be stored and later enforced as constraints by the geometry optimization 1030, as described below.

The system generates lane geometries 1020, such as initial polylines, representing the lanes corresponding to the lane graph topology obtained in step 1005. The geometric location of the vertices of these initial polylines is an initial estimate determined by the system, which is later refined by the geometry optimization 1030, as described below. In some implementations, the polyline vertices can initially be spread along the triangulation line they intersect in a way that permits as wide a lane as possible. For example, if only a single polyline has a vertex belonging to a given triangulation line, the vertex will be placed approximately at the midpoint of the triangulation line. If a second polyline has a vertex on the same triangulation line, the two vertices will be located respectively one-fourth and three-fourth of the way along the triangulation line. This case is illustrated by vertices 980a and 980b in FIG. 9, both of which traverse the same triangulation line 985. In alternate implementations, the initial spacing can follow patterns other than approximately maximal lane width, such as splitting the geometric path in half, and spacing the lanes traveling in opposite directions approximately equally in the appropriate half of the path.

### Lane Graph Geometry Optimization

The system performs geometry optimization 1030 on the initial collection of polylines. Optimizing the geometry means selecting the geometric position of each vertex of every polyline introduced in the initialization step that generates lane geometries 1020. The location of each vertex can be determined within a range of possible locations along its corresponding triangulation line, so together they can be adjusted to create multiple polyline shapes for the lanes. The role of geometry optimization is to select among these possibilities.

The system can perform geometry optimization by optimizing a cost function as applied to the polylines representing lanes. For example, the cost function might assign the preferable scores to shorter polylines. A different cost function might also assign preferable scores to the straightest polylines. Yet another cost function might assign preferable scores to polylines with the smallest changes in curvature, or to those that are parallel to the closest curb or lane marker, or other similar costs. Another implementation may learn the cost function, using machine learning techniques, where the cost function is trained so that the geometry optimization returns lane shapes to reflect lane geometries in the real world.

To perform the optimization, the location of every vertex along the corresponding triangulation line can be represented jointly as a vector of dimension equal to the number of vertices, with the entries in the vector equal to the current location of the vertex along the corresponding triangulation line. For example, for a given lane and corresponding polyline geometry, the first entry in the vector can be the current location of the vertex representing the intersection of the lane and the first triangulation line. The second entry in the vector can be the current location of the vertex representing the intersection of the lane and the second triangulation line, and so on.

Only some values of the vector described above are valid. As described earlier, each entry must separately satisfy the constraint that a vertex cannot approach the endpoint of its triangulation edge by less than half a minimal lane width. Also as described earlier, multiple vertices placed along the same triangulation line must satisfy particular directional constraints, e.g., a left-right constraint. Conveniently, all these constraints are convex constraints. Therefore the space of valid vector representations of a lane graph geometry is a convex space. Convex spaces have useful mathematical properties. In particular, many optimization algorithms are known that can optimize a cost function over a convex space. In some implementations, the cost function can be chosen to be itself a convex function, in which case even more specialized and faster algorithms can be applied, and stronger guarantees can be made that the algorithm will find the optimal vector. However, in general, the cost function need not be convex.

The system can use an optimization technique such as gradient descent (or its many variants) to find vertex locations that optimize the geometric cost function. Once the vector of vertex locations is initialized using the initial polylines, the system can iteratively perform the optimization using a conventional optimization technique, with each iteration of the optimization method producing a vector that is closer to the optimized result. Since these vectors belong to a convex set, the system can use any conventional convex optimization technique, with the result guaranteed to converge on a locally optimized result.

For some choices of cost function, such as one favoring the shortest polyline, known specialized algorithms such as the funnel algorithm can return the optimal vertex locations as a mathematical closed form, without iterations.

Additional geometric constraints can be enforced on the result of the geometric optimization. For example, a constraint might state that a lane must be no less than 12 feet wide, therefore any geometry that requires three lanes in a space that is 30 feet wide cannot legally exist. Or, a lane graph geometry can be rejected if, even after optimization, it contains polyline geometries with undesirable properties such as abrupt changes in curvature. If the geometric optimization fails to find a lane graph geometry that satisfies all the geometric constraints, then the corresponding lane graph topology is itself infeasible and will be rejected. Such pruning can improve the efficiency of the lane graph topology search.

Once the geometry of all the polylines have been optimized, a final optimization step can identify the location of split and merge points along adjacent lanes. A split point can be introduced at the last vertex where the vertices of two neighboring polylines either exactly coincide or are closer than some threshold distance. Since, before such a split point, all corresponding pairs of vertices from the two polylines are closer than the threshold, these pairs of vertices can be identified as single vertices and the two polylines before the split point can be considered the same, and represented by a single polyline. Merge points can be determined analogously.

The system stores the association between edges (or alternatively, triangulation lines) and locations in the geometric region. The system converts each polyline vertex location within its corresponding triangulation line to a location in the map using this stored association.

The system generates lane curves 1040 from the set of optimized polylines created in step 1030. Since drivable lanes are typically designed as continuous curves, not as polylines, the system can smooth the polylines. For example, the system can generate a spline from the optimized polylines generated in step 1030. The result is a final set of geometric lane paths, which can be provided 1050 to connected system such as self-driving cars.

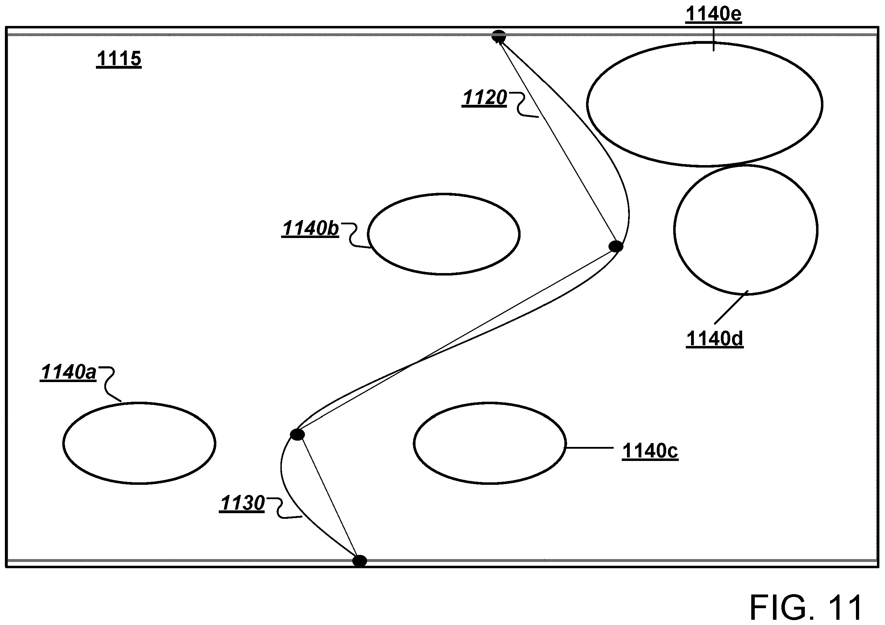

FIG. 11 illustrates a drivable region of space 1115. The system described in this specification can create an initial polyline 1120 through a set of obstacles 1140a-1 140e. As described in reference to FIG. 10, the system can generate a spline 1130 that traverses the same vertices as the polyline 1120, but which represents a lane geometry that contains no internal edge.

While the techniques described in this specification were largely presented in the context of a self-driving car, they can also apply to processing of data for the purpose of mapping. While maps are typically created from images (e.g., taken by satellites) and surveys, the techniques described above can be used to enhance such data sources by determining lane geometries that can be included in one or more maps. For example, in such cases, in operation 1050 of FIG. 10, the geometric lane paths can be provided to a mapping system.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, e.g., one or more engines of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program which may also be referred to or described as a program, software, a software application, an app, a engine, a software engine, a script, or code) can be written in any form of programming language, including compiled or interpreted languages, or declarative or procedural languages, and it can be deployed in any form, including as a stand-alone program or as a engine, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more engines, sub-programs, or portions of code. A computer program can be deployed to be executed on one computer or on multiple computers that are located at one site or distributed across multiple sites and interconnected by a data communication network.

For a system of one or more computers to be configured to perform particular operations or actions means that the system has installed on it, software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

As used in this specification, an "engine," or "software engine," refers to a software implemented input/output system that provides an output that is different from the input. An engine can be an encoded block of functionality, such as a library, a platform, a software development kit ("SDK"), or an object. Each engine can be implemented on any appropriate type of computing device, e.g., servers, mobile phones, tablet computers, notebook computers, music players, e-book readers, laptop or desktop computers, PDAs, smart phones, or other stationary or portable devices, that includes one or more processors and computer readable media. Additionally, two or more of the engines may be implemented on the same computing device, or on different computing devices.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and pointing device, e.g., a mouse, trackball, or a presence sensitive display or other surface by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone, running a messaging application, and receiving responsive messages from the user in return.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system engines and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In certain some cases, multitasking and parallel processing may be advantageous.

## Claims

1. A computer-implemented method comprising:
receiving data representing a topological lane path through a plurality of cells of a drivable region (1115);
generating, from the topological lane path, an initial polyline (1120) that traverses the same plurality of cells as the topological lane path, wherein the initial polyline is defined by a plurality of vertices located on edges of a triangulated decomposition of the drivable region;
performing a geometry optimization process on the initial polyline to generate a final polyline according to one or more optimization criteria; and
generating, from the final polyline, a geometric lane path (1130) representing a geometry of a drivable lane that traverses the drivable region.

2. The computer-implemented method of claim 1, comprising providing the geometric lane path for use, by one or more systems of an autonomous vehicle, in navigating the autonomous vehicle through the drivable region.

3. The computer-implemented method of claim 2, wherein the computer-implemented method is performed by a computing system on-board the autonomous vehicle.

4. The computer-implemented method of claim 2 or claim 3, wherein the received data representing a topological lane path is derived from data representing the drivable region that is obtained by processing data from sensors in the autonomous vehicle as it is navigating in the drivable region.

5. The method of any of claims 1 to 4, where vertices on the same triangulation line satisfy a directional constraint.

6. The method of any of claims 1 to 5, where the geometry optimization process assigns preferable scores to shorter polylines.

7. The method of any of claims 1 to 6 where the geometry optimization includes performing gradient descent.

8. The method of any of claims 1 to 7 where generating the geometric lane path comprises smoothing the final polyline to form a smoothed final polyline.

9. The method of claim 8 where the smoothed final polyline is a spline of the final polyline.

10. The method of any one of claims 1 to 9 further comprising:
evaluating the final polyline against a constraint; and
in response to determining that the constraint is not satisfied, rejecting the final polyline.

11. A system (600) comprising one or more computers and one or more storage devices storing instructions that when executed by the one or more computers cause the one or more computers to perform the method of any one of claims 1 to 10.

12. One or more non-transitory computer-readable storage media storing instructions that when executed by one or more computers cause the one or more computers to perform the method of any one of claims 1 to 10.

## Patentansprüche

1. Computerimplementiertes Verfahren, umfassend:
Empfangen von Daten, die einen topologischen Fahrspurpfad durch eine Vielzahl von Zellen einer befahrbaren Region (1115) darstellen;
Erzeugen, aus dem topologischen Fahrspurpfad, einer anfänglichen Polylinie (1120), die dieselbe Vielzahl von Zellen wie der topologische Fahrspurpfad durchquert, wobei die anfängliche Polylinie durch eine Vielzahl von Scheitelpunkten definiert ist, die sich auf Kanten einer triangulierten Dekomposition der befahrbaren Region befinden;
Durchführen eines Geometrieoptimierungsprozesses an der anfänglichen Polylinie zum Erzeugen einer endgültigen Polylinie gemäß einem oder mehreren Optimierungskriterien; und
Erzeugen, aus der endgültigen Polylinie, eines geometrischen Fahrspurpfades (1130), der eine Geometrie einer befahrbaren Fahrspur darstellt, welche die befahrbare Region durchquert.

2. Computerimplementiertes Verfahren nach Anspruch 1, umfassend das Bereitstellen des geometrischen Fahrspurpfads zur Nutzung durch ein oder mehrere Systeme eines autonomen Fahrzeugs bei der Navigation des autonomen Fahrzeugs durch die befahrbare Region.

3. Computerimplementiertes Verfahren nach Anspruch 2, wobei das computerimplementierte Verfahren von einem Computersystem an Bord des autonomen Fahrzeugs durchgeführt wird.

4. Computerimplementiertes Verfahren nach Anspruch 2 oder Anspruch 3, wobei die empfangenen Daten, die einen topologischen Fahrspurpfad darstellen, von Daten abgeleitet werden, welche die befahrbare Region darstellen, die durch Verarbeitung von Daten von Sensoren in dem autonomen Fahrzeug erhalten werden, während es in der befahrbaren Region navigiert.

5. Verfahren nach einem der Ansprüche 1 bis 4, wobei Scheitelpunkte auf der gleichen Triangulationslinie eine richtungsabhängige Beschränkung erfüllen.

6. Verfahren nach einem der Ansprüche 1 bis 5, wobei der Geometrieoptimierungsprozess kürzeren Polylinien eine bevorzugte Bewertung zuweist.

7. Verfahren nach einem der Ansprüche 1 bis 6, wobei die Geometrieoptimierung das Durchführen eines Gradientenabstiegs beinhaltet.

8. Verfahren nach einem der Ansprüche 1 bis 7, wobei das Erzeugen des geometrischen Fahrspurpfads ein Glätten der endgültigen Polylinie umfasst, um eine geglättete endgültige Polylinie zu bilden.

9. Verfahren nach Anspruch 8, wobei die geglättete endgültige Polylinie ein Spline der endgültigen Polylinie ist.

10. Verfahren nach einem der Ansprüche 1 bis 9, ferner umfassend:
Bewerten der endgültigen Polylinie gegenüber einer Beschränkung; und
in Reaktion auf das Ermitteln, dass die Beschränkung nicht erfüllt ist, Ablehnen der endgültigen Polylinie.

11. System (600), umfassend einen oder mehrere Computer und ein oder mehrere Speichergeräte, die Anweisungen speichern, die, bei Ausführung durch den einen oder die mehreren Computer, den einen oder die mehreren Computer zum Durchführen des Verfahrens nach einem der Ansprüche 1 bis 10 veranlassen.

12. Ein oder mehrere nichtflüchtige computerlesbare Speichermedien, die Anweisungen speichern, die, bei Ausführung durch einen oder mehrere Computer, den einen oder die mehreren Computer zum Durchführen des Verfahrens nach einem der Ansprüche 1 bis 10 veranlassen.

## Revendications

1. Procédé mis en œuvre par ordinateur comprenant :
la réception de données représentant un trajet de voie topologique à travers une pluralité de cellules d'une région carrossable (1115) ;
la génération, à partir du trajet de voie topologique, d'une polyligne initiale (1120) qui traverse la même pluralité de cellules que le trajet de voie topologique, dans lequel la polyligne initiale est définie par une pluralité de sommets situés sur les bords d'une décomposition triangulée de la région carrossable ;
la réalisation d'un processus d'optimisation de géométrie sur la polyligne initiale pour générer une polyligne finale selon un ou plusieurs critères d'optimisation ; et
la génération, à partir de la polyligne finale, d'un trajet de voie géométrique (1130) représentant une géométrie d'une voie carrossable qui traverse la région carrossable.

2. Procédé mis en œuvre par ordinateur selon la revendication 1, comprenant la fourniture du trajet de voie géométrique pour utilisation, par un ou plusieurs systèmes d'un véhicule autonome, dans le déplacement du véhicule autonome à travers la région carrossable.

3. Procédé mis en œuvre par ordinateur selon la revendication 2, dans lequel le procédé mis en œuvre par ordinateur est réalisé par un système informatique à bord du véhicule autonome.

4. Procédé mis en œuvre par ordinateur selon la revendication 2 ou la revendication 3, dans lequel les données reçues représentant un trajet de voie topologique sont dérivées de données représentant la région carrossable qui est obtenue en traitant des données provenant de capteurs dans le véhicule autonome lorsqu'il se déplace dans la région carrossable.

5. Procédé selon l'une quelconque des revendications 1 à 4, dans lequel les sommets sur la même ligne de triangulation satisfont une contrainte directionnelle.

6. Procédé selon l'une quelconque des revendications 1 à 5, dans lequel le processus d'optimisation géométrique attribue des scores préférentiels aux polylignes plus courtes.

7. Procédé selon l'une quelconque des revendications 1 à 6, dans lequel l'optimisation géométrique comporte la réalisation d'une descente de gradient.

8. Procédé selon l'une quelconque des revendications 1 à 7, dans lequel la génération du trajet de voie géométrique comprend le lissage de la polyligne finale pour former une polyligne finale lissée.

9. Procédé selon la revendication 8, dans lequel la polyligne finale lissée est un spline de la polyligne finale.

10. Procédé selon l'une quelconque des revendications 1 à 9, comprenant en outre :
l'évaluation de la polyligne finale par rapport à une contrainte ; et
en réponse à la détermination que la contrainte n'est pas satisfaite, le rejet de la polyligne finale.

11. Système (600) comprenant un ou plusieurs ordinateurs et un ou plusieurs dispositifs de stockage stockant des instructions qui, lorsqu'elles sont exécutées par les un ou plusieurs ordinateurs, amènent les un ou plusieurs ordinateurs à réaliser le procédé de l'une quelconque des revendications 1 à 10.

12. Un ou plusieurs supports de stockage non transitoires lisibles par ordinateur stockant des instructions qui, lorsqu'elles sont exécutées par un ou plusieurs ordinateurs, amènent les un ou plusieurs ordinateurs à réaliser le procédé de l'une quelconque des revendications 1 à 10.
